# EUROPEAN PATENT APPLICATION

(11) **EP 4 449 873 A1**
(43) Date of publication of application: **23.10.2024**
(21) Application number: 23168560.3
(22) Date of filing: 18.04.2023
(51) Int. Cl.: A23C 21/06, A23L 33/115, A23L 33/18, A23L 33/19, A23L 33/00

(54) **NUTRITIONAL COMPOSITION WITH PARTIALLY HYDROLYSED PROTEIN AND PRODUCTION PROCESS THEREOF**

(71) Applicant: N.V. Nutricia, 2712 HM Zoetermeer (NL)
(72) Inventor: Chun, Katrina, Auckland (NZ); Das, Shantanu, Auckland (NZ)
(74) Representative: Nederlandsch Octrooibureau

(57) **Abstract**

The present invention concerns a powdered nutritional composition comprising intact protein and partially hydrolysed whey protein and a dry-blending process for obtaining the powdered nutritional composition.

## Description

### TECHNICAL FIELD OF THE INVENTION

The present invention is in the field of nutrition and relates to a nutritional composition comprising intact and hydrolysed protein.

### BACKGROUND OF THE INVENTION

In conventional milk formula the protein is intact and not hydrolysed. It has been known that hydrolysed proteins aids digestion in infants with sensitive guts. Conventional hydrolysed protein formula, have proteins that are 100% hydrolysed and tend to have a bitter taste which is not easily accepted by infants and is therefore not favourable to all babies or toddlers. Moreover, these formulae comprising 100% hydrolysed protein are conventionally manufactured through a wet-blending process using enzymatic hydrolysis. Limited by equipment and capacity, wet-blending on-site faces more difficulties and is costly.

CN 104522175 describes an infant formula milk powder including raw milk, lactose, desalted whey powder, alpha-lactalbumin, hydrolysed whey powder, vegetable oil, probiotics, choline chloride, calcium chloride, calcium carbonate, potassium chloride and taurine and uses a wet blending process to mix intact and hydrolysed whey protein to obtain the powdered nutritional composition.

WO9705785 describes a powdered nutritional composition comprising at least 15 wt.% of modified protein to promote slow digestion. The intact and hydrolysed protein are mixed through a wet-blending process.

WO03065816 relates to a nutritional supplement for human milk to feed premature infants comprising protein, fat and carbohydrates wherein the ratio of intact protein to hydrolysed protein is around 50 :50 and wherein the carbohydrate content is limited to no more than about 10% dry weight of the nutritional supplement, and the fat content is at least about 35% dry weight, to reduce the increase in osmolality occurring when the supplement is added to human milk and, thus, produce a supplemented human milk that is better tolerated by the infants.

Nevertheless, there is a relevant need in the art for nutritional compositions which provide a proper combination of partially hydrolysed protein (pHP) and intact protein having an improved taste and is easy to manufacture.

### SUMMARY OF THE INVENTION

The inventors have surprisingly found that a powdered nutritional composition selected from infant formula, follow on formula or young child formula comprising a protein fraction wherein 35-85 wt.% is intact protein and 15-65 wt.% is partially hydrolysed whey protein based on total weight of the protein fraction, and wherein the tapped bulk density of the powder composition is at least 0.50 g/100 ml, preferably at least 0.52 g/100 ml, even more preferably at least 0.55 g/100 ml, has improved flavour compared to other infant formulas comprising hydrolysed protein.

Another aspect of the invention is a process of obtaining a nutritional composition of the invention in a powder form, the composition comprises non-hydrolysed (intact) protein and partially hydrolysed (pHP) whey protein, the process comprising:
a. providing a non-hydrolysed (intact) protein fraction in powdered form;
b. providing a partially hydrolysed whey protein fraction in powdered form;
c. dry blending the non-hydrolysed protein fraction and the partially hydrolysed whey protein fraction; and optionally,
d. dry-blending nutritional ingredients comprising vitamins premix, DHA, probiotics, prebiotics, vegetable fats in powder form to provide the nutritional powder composition.

The dry-blending process is easier and cheaper to perform compared to a wet blending process in which the protein is subjected to enzymatic hydrolysis before being wet-blended with other components and after which it is subjected to a spray-drying step. The process according to the invention requires less time and is less complex by removal of a first wet-blending phase in which enzymatic hydrolysis takes place. Surprisingly, it has been found that by use of a dry-blending process of intact protein with partially hydrolysed protein, instead of using a wet-blending process through e.g. enzymatic hydrolysis, the bulk density of the powdered nutritional composition is beneficially higher. Unexpectedly, the flavour of the powdered nutritional composition obtainable by the dry-blending process was improved. It is speculated that a higher bulk density results in less oxygen transfer with the powder and thus a less oxidized flavour is present. The powdered composition obtainable by the dry-blending process as defined is perceived more sweet and creamy and easier accepted by infants, even in the presence of substantial amounts hydrolysed protein.

Advantageously, the nutritional composition improves digestion in infants with sensitive tummies. While for populations with allergies, in particular cow's milk allergy, 100% of the protein is extensively or partially hydrolysed, the population with sensitive tummies, rather than allergy, a specific targeted formula was lacking. The nutritional composition comprising intact protein and whey protein hydrolysate aids digestion in babies' with sensitive tummies, yet delivering the optimal nutritional benefits of a formula. It also helps babies to improve sensitivity and tolerance to intact protein as the product contains both the intact and hydrolyzed proteins. In addition to the improved nutritional profile and benefit of being more suitable for sensitive guts, the nutritional composition beneficially also has a less challenging sensory profile in comparison to conventional hydrolyzed protein formula with bitter taste. The sensorial aspect of the product is acceptable and comparable to normal toddler formula with creamy and milky flavor.

### DETAILED DESCRIPTION OF THE INVENTION

The invention thus concerns a powdered nutritional composition comprising35-85 wt.% intact protein, 15-65 wt.% partially hydrolysed whey protein based on total protein; and wherein the tapped bulk density of the powder composition is at least 0.50, preferably at least 0.52 g/100 ml, even more preferably at least 0.55 g/ 100ml.

Another aspect of the invention is a process of obtaining a nutritional composition of the invention in a powder form, the composition comprises non-hydrolysed (i.e. intact) protein and partially hydrolysed (pHP) whey protein, the process comprising:
(a) providing a non-hydrolysed (intact) protein fraction in powdered form;
(b) providing a partially hydrolysed whey protein fraction in powdered form;
(c) dry blending the non-hydrolysed protein fraction and the partially hydrolysed whey protein fraction; and optionally,
(d) adding dry nutritional ingredients comprising vitamins premix, DHA, probiotics, prebiotics, vegetable fats in powder form to provide the nutritional powder composition.

A further aspect of the invention is a powdered nutritional composition obtainable by the process according to the invention, comprising a protein fraction, wherein 35-85 wt.% of the protein is intact protein, and 15-65 wt.% is partially hydrolysed whey protein; and wherein the tapped bulk density of the powder composition is at least 0.50 g/100 ml, preferably at least 0.52 g/100 ml, even more preferably at least 0.55 g/100 ml.

A further aspect of the invention concerns a powdered nutritional composition comprising a protein fraction, wherein 35-85 wt.% of the protein is intact protein, and 15-65 wt.% is partially hydrolysed whey protein; and wherein the tapped bulk density of the powder composition is at least 0.50 g/100 ml, preferably at least 0.52 g/100 ml, even more preferably at least 0.55 g/100 ml for use in improving digestibility in a human subject with an age of 0 to 36 months.

This aspect of the invention can also be worded as a non-therapeutic method for promoting intestinal development and/or promoting digestion in an infant, said method comprising administering to an infant a nutritional composition selected from infant formula, follow on formula or young child formula, comprising a protein fraction comprising casein and whey protein, wherein the protein fraction comprises based on the total weight of the protein fraction 45-85 wt.% of intact protein, and 15-65 wt.% of partially hydrolysed whey protein; wherein the nutritional composition is a powder composition, the bulk density of the powder composition is at least 0.50 g/100 ml, preferably at least 0.52 g/100 ml, even more preferably at least 0.55 g/100 ml.

In one embodiment, the subject is a human subject, preferably a human infant. In the context of the present invention, infants refer to subjects having an age of 1 - 36 months. Preferably, the human subject is an infant aged 0-36 months, most preferably 12 - 36 months. If the subject is a human infant, preferably the infant is at risk of having a compromised microbiota and is typically selected from the group of infants born via caesarean section, preterm infants, infants born from a mother who received intrapartum antibiotics, infants receiving or having received antibiotics, infants receiving or having received proton pump inhibitors, formula fed infants, or combinations thereof.

If the human subject is an infant, the nutritional composition is preferably selected from infant formula, follow-on formula and young child formula. The terms "infant formula" or "follow-on formula" or "young child formula" as used herein mean that the composition is artificially made or in other words that it is "synthetic". This means that the nutritional composition preferably is not unprocessed mammalian milk. The nutritional composition according to the invention typically does not comprise human milk or human milk protein.

In the present invention, "infant formula" refers to nutritional compositions intended for infants of 0 to about 4 to 6 months of age and are intended as a substitute for human milk. Typically, infant formulae are suitable to be used as sole source of nutrition. Such infant formulae are also known as starter formula. "Follow-on formula" are intended for infants starting at 4 to 6 months of age to 12 months of age, and are intended to be supplementary feedings for infants that start weaning on other foods. Infant formulae and follow-on formulae are subject to strict regulations, for example for the EU regulations no. 609/2013 and no. 2016/127. In the present context, "young child formula" refers to nutritional compositions, artificially made, intended for infants of 12 months to 36 months of age, which are intended to be supplementary feedings for infants. In the context of the present invention, young child formula can also be referred to as growing-up milk.

If the subject is a human infant, the nutritional composition is preferably an infant formula, a follow-on formula or a young child formula. More preferably the nutritional composition is a young child formula.

### Dry-blending process

The powdered nutritional composition according to the invention can be obtained through a process comprising:
(a) providing a non-hydrolysed (intact) protein fraction in powdered form;
(b) providing a partially hydrolysed whey protein fraction in powdered form;
(c) dry blending the non-hydrolysed protein fraction and the partially hydrolysed whey protein fraction; and optionally,
(d) adding dry nutritional ingredients comprising vitamins premix, DHA, probiotics, prebiotics, in powder form to provide the nutritional powder composition.

The process according to the invention is a dry-blending process, and can be performed in any way known in the art. In one embodiment, the dry-blending is performed in a blender. The process according to the invention is entirely performed with only powdered ingredients in a dry state. It is preferred that the intact protein fraction is comprised within a base powder further comprising vitamins, minerals and lipids. Such base powders are well-known in the field of infant formula manufacture.

In one embodiment according to the invention, the dry-blending process does not comprise a spray-drying step. The ingredients that are subjected to the process according to the invention may be spraydried.

The bulk density of the obtained powdered nutritional composition is increased because of the dry-blending process and thereby improving flavour of the reconstituted nutritional composition which is easer accepted by infants and toddlers. It is speculated that dry-blending without spray-drying results in more compact powder and thereby reducing oxygen transfer within the powder and resulting in a less oxidized flavour.

Advantageously, the process according to the invention reduces process costs and is more economical as the complex wet-blending process of the protein fractions is avoided. Dry-blending process is much simpler in comparison to wet-blending, as it only requires a short processing time (much shorter than actual hydrolysis or time required for spray-drying) and also the equipment required is of lower complexity. The benefit of the process according to the invention is that through the dry-blending of the two powdered fractions, no capital investment is needed to introduce partially hydrolyzed protein into the composition, whereas a wet-blending facility with hydrolysis silos and spray-dryers requires a huge investment.

### Bulk density

"Bulk density" refers to the average density of a material, i.e. the mass of the material divided by the total volume occupied by the material. The total volume includes the particle volume, the internal pore volume and the interparticle volume (i.e. the void volume between particles). Bulk density includes loose bulk density and tapped bulk density. In examples of this invention, tapped bulk density was tested.

The loose or "aerated" bulk density, is the density determined by flowing a defined amount of powder to fill the cylinder or vessel with a known volume under the influence of gravity, and is also referred to as the untapped volume. It has a relatively low bulk density value compared to tapped bulk density. In one embodiment, the tapped bulk density is the density obtained after mechanically tapping a graduated measuring cylinder or vessel containing the powder sample.

Any suitable method known in the art can be used to determine the tapped bulk density. A suitable method includes ISO test 8967:2005. A typical procedure, which is preferentially used in the context of the present invention, is performed on a Jolting Volumeter STAV-II (e.g. by J Engelsmann AG) set to a 100 taps, and includes the following steps:
(1) 100 g of sample powder is placed in a dry measuring cylinder (250 mL).
(2) The cylinder is secured into the volumeter and the tapping procedure is performed.
(3) The volume of the sample after tapping is recorded.
(4) The tapped bulk density is calculated using the formula D = *m*/*v,* wherein D is density, m is mass and v is volume.

Preferably the tapped bulk density of the nutritional composition is at least 0.50 g/100 ml, preferably at least 0.52 g/100 ml, even more preferably, at least 0.55 g/100 ml and most preferably at least 0.60 g/100 ml. Surprisingly, it has been found that by dry-blending the base powder with the hydrolysed protein powder, a higher bulk density of the final powdered nutritional composition is obtained which improved flavour of the nutritional composition upon reconstitution. Without being bound to any theory, it is speculated that the higher bulk density results in less inter-particle volume due to less blending time in the dry-blending process and thereby reduces the oxygen that that is present between the particle powders resulting in less stale or oxidized flavour.

Another benefit of the invention is that with having higher bulk density, less packaging material is required and thus smaller containers can be used thereby resulting in a more economical and sustainable packaging as well transportation.

### Protein

The nutritional composition comprises protein. The term "protein" as used herein refers to the sum of proteins. The protein preferably provides 5 - 23 %, preferably 8 - 20 % of the total calories. Preferably the nutritional composition comprises protein that provides 10 - 15 % of the total calories. More preferably protein is present in the nutritional composition below 3.5 gram per 100 kcal, more preferably the nutritional composition comprises between 1.5 and 4 g protein, more preferably 1.8 and 3.2 g protein per 100 kcal. Such relatively low protein concentration is advantageously close to human milk, which comprises a lower amount of protein based on total calories than cow's milk. The protein concentration in a nutritional composition is determined by the sum of protein and peptides, including the partially hydrolysed protein, and free amino acids. Preferably, the composition does not comprise free amino acids.

Preferably, the nutritional composition comprises 5 - 25 wt.% protein, based on dry weight of the composition, more preferably 8 - 20 wt.% protein, more preferably 9 - 17 wt.% protein, most preferably 12 - 16 wt.%. When in liquid form, e.g. as a ready-to-feed liquid after reconstitution, the composition preferably provides 0.6 to 3.5 g protein per 100 ml, more preferably 0.8 to 2.8 g per 100 ml, and most preferably between 1.3 and 2.5 g per 100 ml.

Suitable protein sources are dairy protein, vegetable protein, or mixtures thereof. Examples of suitable vegetable protein are soy protein, pea protein, potato protein and combinations thereof. Preferred dairy protein sources are a derived from bovine, goat, donkey, sheep, buffalo, or camel milk and combinations thereof. Most preferably, the protein is bovine dairy protein.

Preferably the nutritional composition comprises at least 3 wt.% casein based on dry weight. Preferably the casein is intact (non-hydrolysed). The nutritional composition preferably comprises casein and whey proteins in a weight ratio casein : whey protein of 10 : 90 to 90 : 10, more preferably 20 : 80 to 80 : 20, most preferably between 60 : 40 to 30 : 70.

The nutritional composition according to the invention comprises intact, non-hydrolysed protein and partially hydrolysed protein. Intact protein is protein in its naturally occurring form without being broken down into peptides. The term "intact protein" as used herein refers to protein not having been subjected to (enzymatic) hydrolysis. In a preferred embodiment, intact protein refers to mammalian protein, more preferably mammalian milk protein, most preferably cow's milk protein. The intact protein does not comprise hydrolysed protein. The term "partially hydrolysed whey protein (pHP)" as used herein refers protein that is partially hydrolysed. According to the invention, the partially hydrolysed whey protein may also be referred to as partial whey protein hydrolysate.

In a preferred embodiment, the intact protein comprises casein and whey, more preferably the intact protein comprises casein from cow's milk. In one embodiment according to the invention at least 80% of the intact protein has a molecular weight above 20 kDa, preferably above 22 kDa. Preferably, the intact protein is comprised within a base powder further comprising other components such as vitamins, minerals and (vegetable) oils.

In a preferred embodiment, the protein fraction in the powdered nutritional composition comprises 35 - 85 wt.% intact protein, more preferably 45 - 65 wt.% intact protein, even more preferably 50 - 60 wt.% intact protein.

It is advantageous to administer intact proteins as part of the nutritional composition to serve as a slow transition to a diet comprising intact protein in infants and toddlers and thereby building tolerance to intact protein. While conventional infant formula comprising 100% intact protein can cause stomach pain, it is hypothesized that introducing intact protein at a lower levels than the conventional infant milk formula is beneficial so sensitive guts of babies get sensitized to the intact proteins over time, reducing the likelihood of potential intolerances to intact protein in the future. Another advantage is that flavour and taste of the nutritional composition is improved and masks the bitter taste of partially hydrolysed protein comprised in the composition which is consequently easier accepted by infants.

The nutritional composition according to the invention further comprises partially hydrolysed whey protein. In an especially preferred embodiment, the protein component consists of intact protein as defined above and partially hydrolysed whey protein.

The partially hydrolysed whey protein according to the invention is typically a powdered composition comprising whey protein selected from acid whey protein, sweet whey protein, whey protein concentrate, whey protein isolate and demineralized whey powder. Preferably, the partially hydrolysed protein is hydrolysed protein made from acid whey. Preferably, the partially hydrolysed protein contains at least 80 wt% of the peptides having a molecular weight in the range of 0.3 kDa to 20 kDa. More preferably, at least 40 wt% of the partially hydrolysed whey protein are peptides having a molecular weight in the range of 1 to 10 kDa,. Even more preferably, the partially hydrolysed protein contains at least 50 wt% of peptides with a molecular weight of below 5 kDa. In a further preferred embodiment, the partially hydrolysed protein comprises at most 20% of the peptides having a molecular weight above 20 kDa, more preferably at most 18%, even more preferably at most 15%. In an embodiment according to the invention, the partially hydrolysed protein does not contain intact protein.

The peptide size and molecular weight distribution can be determined by routine methods known to the skilled person such as high performance liquid chromatography (HPLC) or size exclusion chromatography (SEC), in particular high performance size exclusion chromatography. A suitable method is disclosed in González-Tello et al., 1994 Enzymatic hydrolysis of whey proteins II. Molecular weight range, Biotech. Bioeng, 44, 529 - 532.

In one embodiment, the partially hydrolysed protein is not or does not comprise extensively hydrolysed protein (also referred to as extensive protein hydrolysate) and/or free amino acids. Extensively hydrolysed protein and/or free amino acids typically do not evoke an allergic reaction and are used to manage cow's milk allergy infants. In another embodiment, the partially hydrolysed protein does not comprise partial casein hydrolysate or also called partially hydrolysed casein protein. In a preferred embodiment, the partially hydrolysed protein does not comprise intact, unprocessed protein. Partially hydrolysed whey protein is commercially available from several suppliers.

In a preferred embodiment, the protein fraction in the powdered nutritional composition comprises 15 - 65 wt. % partially hydrolysed whey protein, more preferably 35 - 55 wt %, even more preferably 40 - 50 wt.% partially hydrolysed whey protein.

Advantageously, the partially hydrolysed milk protein is more gentle for infants with sensitive tummies while conventional milk formula typically comprises 100 % intact protein which can cause stomach pain as tolerance to intact proteins is still developing in infants.

### Lipid

The nutritional composition further comprises a lipid fraction. Lipid fractions are commonly present in infant formula products and well-known to the skilled person. Preferably, the nutritional composition comprises PUFAs, preferably n-3 and/or n-6 PUFAs. Preferably, the nutritional composition comprises n3 LC-PUFA, such as EPA, ALA and/or DHA, more preferably DHA. As the conversion of ALA to DHA may be less efficient in infants, preferably both ALA and DHA are present in the nutritional composition for infants.

Herein, LA refers to linoleic acid and/or acyl chain (18:2 n6); ALA refers to alpha-linolenic acid and/or acyl chain (18:3 n3); SFA relates to saturated fatty acids and/or acyl chains, MUFA relates to monounsaturated fatty acid and/or acyl chains, PUFA refers to polyunsaturated fatty acids and/or acyl chains with 2 or more unsaturated bonds; LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). PA relates to palmitic acid and/or acyl chains (C16:0). Medium chain fatty acids (MCFA) refer to fatty acids and/or acyl chains with a chain length of 6, 8 or 10 carbon atoms. n3 or omega 3 PUFA refers to polyunsaturated fatty acids and/or acyl chains with 2 or more unsaturated bonds and with an unsaturated bond at the third carbon atom from the methyl end of the fatty acyl chain, n6 or omega 6 PUFA refers to polyunsaturated fatty acids and/or acyl chains with 2 or more unsaturated bonds and with an unsaturated bond at the sixth carbon atom from the methyl end of the fatty acyl chain. BA refers to butyric acid (4:0).

The nutritional composition according to the present preferably comprises LA. LA is an n6 PUFA and the precursor of n6 LC-PUFA and is an essential fatty acid as it cannot be synthesized by the human body. LA preferably is present in a sufficient amount in order to promote a healthy growth and development, yet in an amount as low as possible to prevent negative, competitive, effects on the formation of n3 PUFA and a too high n6/n3 ratio. The nutritional composition therefore preferably comprises less than 25 wt.% , more preferably less than 20 wt.%, more preferably less than 15 wt.% LA based on total fatty acids. The nutritional composition preferably comprises at least 5 wt.% LA based on fatty acids, preferably at least 7.5 wt.%, more preferably at least 10 wt.% based on total fatty acids.

The nutritional composition preferably comprises ALA. ALA is a n3 PUFA and the precursor of n3 LC-PUFA and is an essential fatty acid as it cannot be synthesized by the human body. Preferably ALA is present in a sufficient amount to promote a healthy growth and development of the infant. The nutritional composition therefore preferably comprises at least 0.5 wt.%, more preferably at least 1.0 wt.%, more preferably the nutritional composition comprises at least 1.5 wt.%, even more preferably at least 2.0 wt.% ALA based on total fatty acids. Preferably the nutritional composition comprises less than 10 wt.% ALA, more preferably less than 5.0 wt.% based on total fatty acids.

The weight ratio LA/ALA preferably is well balanced in order to ensure an optimal n6/n3 PUFA, n6/n3 LC PUFA and DHA/ARA ratio in the cellular membranes. Therefore, the nutritional composition preferably comprises a weight ratio of LA/ALA from 2 to 20, more preferably from 3 to 15, more preferably from 5 to 12, more preferably from 5 to 10. Preferably the n6 PUFA/n3 PUFA weight ratio is from 3 to 20, more preferably from 3 to 15, more preferably from 5 to 12, more preferably from 5 to 10.

Preferably, the nutritional composition comprises n3 LC-PUFA, such as EPA, DPA and/or DHA, more preferably DHA. As the conversion of ALA to DHA may be less efficient in infants, preferably both ALA and DHA are present in the nutritional composition. Preferably the nutritional composition comprises at least 0.05 wt.%, preferably at least 0.1 wt.%, more preferably at least 0.2 wt.%, of DHA based on total fatty acids. Preferably the nutritional composition comprises not more than 2.0, preferably not more than 1.0 wt.%, of DHA based on total fatty acids.

The nutritional composition preferably comprises ARA. Preferably the nutritional composition comprises at least 0.05 wt.%, preferably at least 0.1 wt.%, more preferably at least 0.2 wt.%, of ARA based on total fatty acids. As the group of n6 fatty acids, especially arachidonic acid (ARA) counteracts the group of n3 fatty acids, especially DHA, the nutritional composition preferably comprises relatively low amounts of ARA. Preferably the nutritional composition comprises not more than 2.0 wt.%, preferably not more than 1.0 wt.%, of ARA based on total fatty acids. Preferably the weight ratio between DHA and ARA is between 1/4 to 4/1, more preferably between 1/2 to 2/1, more preferably between 0.6 and 1.5.

### Digestible carbohydrates

The nutritional composition comprises digestible carbohydrates. The digestible carbohydrates preferably provide 30 to 80% of the total calories of the nutritional composition. Preferably the digestible carbohydrates provide 40 to 65% of the total calories. Based on calories the nutritional composition preferably comprises of 5 to 20 g of digestible carbohydrates per 100 kcal, more preferably 6 to 16 g. Based on dry weight the nutritional composition preferably comprises 20 to 80 wt.%, more preferably 40 to 65 wt.% digestible carbohydrates.

When in liquid form, e.g. as a ready-to-feed liquid after reconstitution, the nutritional composition preferably comprises 3 to 20 g digestible carbohydrate per 100 ml, more preferably 4 to 15 g per 100 ml, even more preferably 5 to 10 g digestible carbohydrate per 100 ml.

Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The nutritional composition preferably comprises lactose. The nutritional composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the nutritional composition preferably comprises at least 25 wt.% lactose, preferably at least 40 wt.%.

The nutritional composition preferably comprises digestible carbohydrates. Based on dry weight the nutritional composition preferably comprises 20 to 80 wt.%, more preferably 40 to 65 wt.% digestible carbohydrates.

Preferably, digestible carbohydrates provide 25 to 75% of the total calories of the nutritional composition, more preferably the digestible carbohydrates provide 35 to 55% of the total calories.

Based on calories the nutritional composition preferably comprises of 5 to 20 g of digestible carbohydrates per 100 kcal, more preferably 6 to 16 g per 100 kcal.

Preferred digestible carbohydrate sources are lactose, glucose, sucrose, fructose, galactose, maltose, starch and maltodextrin. The nutritional composition preferably comprises lactose.

### Non-digestible carbohydrates

As used herein, the term "non-digestible carbohydrate" refers to oligosaccharides which are not digested in the intestine by the action of acids or digestive enzymes present in the human upper digestive tract, e.g. small intestine and stomach, but reach the distal portions of the intestines, such as the colon, intact where they are fermented by the human intestinal microbiota. For example, sucrose, lactose, maltose and maltodextrins are considered digestible saccharides.

Microbial metabolites of non-digestible carbohydrates include short chain fatty acids (SCFA), for example acetate, propionate, butyrate, lactate, among others. These fermentation products of non-digestible carbohydrates, *i.e.* SCFA's, significantly reduce apoptosis of gut epithelial cells.

In one embodiment the nutritional composition preferably comprises non-digestible oligosaccharides. Preferably the nutritional composition comprises non-digestible oligosaccharides with a degree of polymerization (DP) between 2 and 250, more preferably 3 and 60. The non-digestible oligosaccharides advantageously further promote digestibility and digestive comfort in human infants. Such non-digestible oligosaccharides typically act as prebiotic. Advantageously and most preferred, the prebiotic oligosaccharides are water-soluble.

Preferably, the nutritional composition comprises 80 mg to 4 g non-digestible oligosaccharides per 100 ml, more preferably 150 mg to 2 g. Based on dry weight, the nutritional composition preferably comprises 0.25 wt.% to 25 wt.%, more preferably 0.5 wt.% to 10 wt.%, even more preferably 1.5 wt.% to 7.5 wt.%. Expressed per 100 g of the composition, non-digestible oligosaccharides may be present in an amount of at least 3 g per 100 g composition, more preferably 3.5 - 8 g per 100 g composition. A lower amount of non-digestible oligosaccharides will be less effective promoting digestibility, whereas a too high amount will result in side-effects of bloating and abdominal discomfort.

Suitable oligosaccharides are at least one, more preferably at least two, preferably at least three selected from the group consisting of fructo-oligosaccharides, galacto-oligosaccharides, xylo-oligosaccharides, arabino-oligosaccharides, arabinogalacto-oligosaccharides, gluco-oligosaccharides, chito-oligosaccharides, glucomanno-oligosaccharides, galactomanno-oligosaccharides, mannan-oligosaccharides, and uronic acid oligosaccharides. The group of fructo-oligosaccharides includes inulins, the group of galacto-oligosaccharides includes transgalacto-oligosaccharides or beta-galacto-oligosaccharides, the group of gluco-oligosaccharides includes cyclodextrins, gentio- and nigero-oligosaccharides and non-digestible polydextrose, the group of galactomanno-oligosaccharides includes partially hydrolyzed guar gum, and the group of uronic acid oligosaccharides includes pectin degradation products (e.g. prepared from apple pectin, beet pectin and/or citrus pectin).

Preferably the nutritional composition comprises fructo-oligosaccharides, galacto-oligosaccharides and/or galacturonic acid oligosaccharides, more preferably fructo-oligosaccharides and/or galacto-oligosaccharides, even more preferably galacto-oligosaccharides, most preferably transgalacto-oligosaccharides. In a preferred embodiment the nutritional composition comprises a mixture of galacto-oligosaccharides and fructo-oligosaccharides, more preferably transgalacto-oligosaccharides and fructo-oligosaccharides. Suitable non-digestible oligosaccharides are for example Vivinal^{®}GOS (FrieslandCampina DOMO), Raftilin^{®}HP or Raftilose^{®} (Orafti).

More preferably, the composition comprises fructo-oligosaccharides and galacto-oligosaccharides at a weight ratio between (20 to 2):1, more preferably (20 to 2):1, even more preferably (20 to 2):1, even more preferably (12 to 7):1. Most preferably the weight ratio is about 9:1.

The galacto-oligosaccharides preferably are beta-galacto-oligosaccharides. In a particularly preferred embodiment the present composition comprises beta-galacto-oligosaccharides ([galactose]n-glucose; wherein n is an integer ranging from 2 to 60, i.e. 2, 3, 4, 5, 6, .... , 59, 60; preferably n is selected from 2, 3, 4, 5, 6, 7, 8, 9, and 10), wherein the galactose units are in majority linked together via a beta linkage. Beta-galacto-oligosaccharides are also referred to as trans-galacto-oligosaccharides (TOS). Beta-galacto-oligosaccharides are for example sold under the trademark Vivinal^{™} (Borculo Domo Ingredients, Netherlands). Another suitable source is Bi2Munno (Classado). Preferably the TOS comprises at least 80% beta-1,4 and beta-1,6 linkages based on total linkages, more preferably at least 90%.

Fructo-oligosaccharide is a prebiotic oligosaccharide comprising a chain of beta-linked fructose units with a DP or average DP of 2 to 250, more preferably 2 to 100, even more preferably 10 to 60. Fructo-oligosaccharide includes inulin, levan and/or a mixed type of polyfructan. An especially preferred fructo-oligosaccharide is inulin. Fructo-oligosaccharide suitable for use in the compositions is also commercially available, e.g. Raftiline^{®}HP (Orafti). Preferably the fructo-oligosaccharide has an average DP above 20.

In one preferred embodiment, the composition according to the invention comprises prebiotic oligosaccharides only, *i.e.,* the composition does not comprise human milk oligosaccharides. In an alternative embodiment, the nutritional composition according to the invention comprises human milk oligosaccharides. In one preferred embodiment, the composition according to the invention comprises human milk oligosaccharides only, *i.e.,* the composition does not comprise prebiotic oligosaccharides as defined above. "Human milk oligosaccharides" (HMOs) are present in human milk and are non-digestible carbohydrates built from the following monomers: D-glucose, D-galactose, N-acetylglucosamine, L-fucose and sialic acid (N-acetylneuraminic acid).

Preferably, the composition of the invention comprises human milk oligosaccharides selected from the group comprising, but not limited to, sialyloligosaccharides, such as 3-sialyllactose (3-SL), 6-sialyllactose (6-SL), lactosialyltetrasaccharide a,b,c (LST), disialyllactoNtetraose (DSLNT), sialyl-lactoNhexaose (S-LNH), DS-LNH, and fucooligosaccharide, such as (un)sulphated fucoidan oligosaccharide, 2'-fucosyllactose (2'- FL), 3-fucosyllactose (3-FL), difucosyllactose, lacto-N-fucopenatose, (LNFP) I, II, III, IV Lacto-N-neofucopenaose (LNnFP), Lacto-N-difucosyl-hexaose (LNDH), and mixtures thereof. Preferably, human milk oligosaccharides are selected from 2'-fucosyllactose (2'-FL), 3-fucosyllactose (3-FL), 3-sialyllactose (3-SL), 6-sialyllactose (6-SL), lacto-N-tetrose (LNT), lacto-N-neotetrose (LNnT), or combinations thereof. The nutritional composition of the present invention more preferably comprises at least one human milk oligosaccharide selected from the group consisting of 2'-FL, 3-FL, 3'-SL and 6'-SL. Most preferably, the composition comprises 2'-FL. Based on dry weight, the present nutritional composition preferably comprises 0.038 wt.% to 12 wt.% HMOs, preferably 0.075 wt.% to 9 wt.% HMOs, more preferably 0.15 wt.% to 6 wt.% HMOs, even more preferably 0.3 wt.% to 2.5 wt.% HMOs. Expressed differently, the composition comprises human milk oligosaccharides in an amount of 0.5 mg to 5 g per 100 ml of the composition, preferably 1.0 mg to 4.5 g per 100 ml of the composition, more preferably 0.5 g to 4.0 g per 100 ml of the composition, even more preferably 1.0 g to 3.5 g per 100 ml of the composition, most preferably 1.5 g to 3.0 g/100 ml of the composition. The amounts expressed per ml of the composition refer to ready-to-drink nutritional composition in liquid form, i.e. after reconstitution. Based on energy, the present nutritional composition preferably comprises 0.008 to 2.5 g HMOs per 100 kcal, preferably 0.015 to 2.5 g HMOs per 100 kcal, more preferably 0.03 to 1.0 g HMOs per 100 kcal, even more preferably 0.06 to 0.5 g HMOs per 100 kcal. A too high amount will result in an increase the risk of osmotic diarrhea, which will counteract the beneficial effects of the mix.

In a preferred embodiment, a nutritional composition according to the invention comprises at least 0.005 g of the sum of 2'-FL, 3-FL, 3'-SL and 6'-SL per 100 ml, more preferably at least 0.01 g, more preferably at least 0.02 g, even more preferably at least 0.04 g of the sum of 2'-FL, 3-FL, 3'-SL and 6'-SL per 100 ml. Based on dry weight, the present nutritional composition preferably comprises at least 0.038 wt.% of the sum of 5 2'-FL, 3-FL, 3'-SL and 6'-SL, more preferably at least 0.075 wt.%, more preferably at least 0.15 wt.% of the sum of 2'-FL, 3-FL, 3'-SL and 6'-SL, even more preferably at least 0.3 wt.%. Based on energy, the present nutritional composition preferably comprises at least 0.008 g of the sum of 2'-FL, 3-FL, 3'-SL and 6'-SL per 100 kcal, more preferably at least 0.015 g per 100 kcal, more preferably at least 0.03 g per 100 kcal, even more preferably at least 0.06 per 100 kcal.

Preferably the nutritional composition according to the invention comprises as a HMOS essentially 2'-FL, that means at least 95 wt.% of the HMOS consists of 2'-FL. Preferably, a nutritional composition according to the invention comprises 0.01 g to 1 g 2'-FL per 100 ml, more preferably 0.02 g to 0.5 g, even more preferably 0.04 g to 0.2 g 2'-FL per 100 ml. Based on dry weight, the present nutritional composition preferably comprises 0.075 wt.% to 8 wt.% 2'-FL, more preferably 0.15 wt.% to 4 wt.% 2'-FL, even more preferably 0.3 wt.% to 1.5 wt.% 2'-FL. Based on energy, the present nutritional composition preferably comprises 0.015 to 1.5 g 2'-FL per 100 kcal, more preferably 0.03 to 0.75 g 2'-FL per 100 kcal, even more preferably 0.06 to 0.4 g 2'-FL per 100 kcal.

In yet another preferred embodiment, a mixture of prebiotic oligosaccharides and human milk oligosaccharides is present. Preferably, the composition comprises at least two different non-digestible carbohydrates wherein at least two non-digestible carbohydrates are selected from either the group of prebiotics oligosaccharides or from the group of human milk oligosaccharides.

More preferably, the composition comprises galacto-oligosaccharide and fructo-oligosaccharide in combination with 2'-FL and/or LNT, preferably with 2'-FL.

Preferably, the weight ratio of human milk oligosaccharides (for instance FL, preferably 2'-FL) to prebiotic oligosaccharide (preferably, galacto-oligosaccharide) is from 5 to 0.05, more preferably 5 to 0.1, more preferably from 2 to 0.1. Preferably the weight ratio human milk oligosaccharides (for instance FL, preferably 2'-FL) to prebiotic oligosaccharide (preferably, fructo-oligosaccharide, more preferably inulin) is from 10 to 0.05, more preferably 10 to 0.1, more preferably from 2 to 0.5.

### Probiotic

The nutritional composition preferably comprises probiotic bacteria. The probiotic bacteria content of the nutritional composition is preferably in the range 10⁴- 10¹² cfu/100g of dry weight, more preferably 10⁷ - 10¹¹ cfu/100g of dry weight.

Preferably the probiotic bacteria is selected from *Bifidobacterium* and/or *Lactobacillus.* More preferably, the nutritional composition comprises *Bifidobacterium,* even more preferably *Bifidobacterium breve,* and most preferably *Bifidobacterium breve M-16V.*

### Nutritional composition

The nutritional composition according to the present invention is preferably an infant formula, a follow on formula or a growing up milk (also called young child formula). This means that the composition that is administered is not human milk. It also means that the composition that is administered is not native cow's milk or native milk from another mammal. Alternatively the terms as used herein, "infant formula" or "follow on formula" or "growing up milk" or "young child formula" means that it concerns a composition that is artificially made or in other words that it is synthetic.

The nutritional composition preferably comprises 3 to 7 g lipid/100 kcal, preferably 4 to 6 g lipid/100 kcal, more preferably 4.5 to 5.5 g lipid/100 kcal, preferably comprises 1.7 to 5 g protein/100 kcal, preferably 1.8 to 3.5 g protein/100 kcal. The nutritional composition preferably comprises 5 to 20 g digestible carbohydrate/100 kcal, preferably 6 to 16 g digestible carbohydrate/100 kcal, more preferably 10 to 15 g digestible carbohydrate/100 kcal.

In a preferred embodiment, the nutritional composition is a powder. The powder may be reconstituted with aqueous liquid to prepare a liquid formula. Such liquid formula prepared by reconstitution are also part of the invention. Typically, the liquid formula is orally administered to the subject. Preferably, the aqueous liquid used for reconstitution is water.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually means "at least one".

### EXAMPLES

For a more complete understanding of the present disclosure, reference is now made to the following examples.

### Example 1 - Higher bulk density of the powdered nutritional composition obtained through a dry-blending process.

In the present example, bulk density was compared between the base powder comprising the intact protein, the partially hydrolysed whey protein and the obtained powdered nutritional composition comprising both fractions (test formula).

The test formula comprised 53,5 wt% infant formula base powder, 7.3 wt% partially hydrolysed whey protein, 32.09 wt% lactose, 4.2 wt% galacto-oligosaccharides, 0.8 wt% fructo-oligosaccharides, 1.6 wt% DHA, 0.5 wt% vitamin premix and 0.04 wt% B. breve based on total weight of the composition. The test formula comprised a protein fraction with 60 wt.% intact protein and 40 wt.% partially hydrolysed whey protein.

The comparative example was a powdered nutritional composition manufactured through wet blending and enzymatic hydrolysis of the protein fraction to obtain a base powder with 100% partially hydrolysed whey protein after which the base powder was dry-blended together with minerals and vitamins. The comparative examples further comprised lactose, GOS, FOS, DHA, ARA, nucleotides, Bifidobacterium probiotics in similar amounts as the test formula.

Bulk density was measured on a Jolting Volumeter STAV-II (J Engelsmann AG) set to a 100 taps. 100 ± 0.1 g of sample powder was placed in a dry measuring cylinder (250 mL). The volume of the powder indicated on the measuring cylinder before tapping was recorded and the cylinder was secured into the volumeter. Once tapping was completed, the volume of the powder was recorded again. Bulk volume measurements were performed in duplicate. Tapped bulk density was calculated from the volume of the sample after tapping using the formula D = *m*/*v,* wherein D is density, m is mass and v is volume. The results are provided in Table 1.

**Table 1. Tapped bulk density 100x of powder material**

| | Bulk density (g/100 ml) |
|---|---|
| Dry blend partially hydrolysed protein | 0.43 |
| Dry blend base powder | 0.51 |
| Test formula (comprising both blends) | 0.65 |
| Comparative example | 0.58 |

As can be derived from Table 1, the tapped bulk density of the test formula was surprisingly higher compared to the comparative example comprising wet-blended hydrolysed protein. Both the base powder and the hydrolysed whey protein powder had lower bulk densities and upon dry-blending these powders using a blender a higher bulk density for the final powder was obtained. It is believed that dry-blending results in more compact powder.

### Example 2 - Higher bulk density of the nutritional composition results in improved flavour upon reconstitution

A taste panel consisting of 7 participants tasted five different products. The tastings were performed blind. The intensity of each pre-defined feature was assessed by low (L) medium (M) and high (H) and a remarks were indicated. In between tastings the palate was neutralized with a cracker and water. Table 2 indicates that the results given by the participants divided over the categories of low, medium and high.

**Table 2. Flavour test of the test formula compared to four other product available on the market.**

| Product | Intact protein (wt%)* | Hydrolysed protein (wt%)* | Sweetness | Creaminess | Bitterness | Remarks |
|---|---|---|---|---|---|---|
| Infant formula (0-12 months) | 0% | 100% (partially hydrolysed whey) | | | | Metallic |
| | | | L: 4 | L: 4 | L: 1 | Slightly burnt |
| | | | M: 3 | M: 3 | M: 3 | Bitter |
| | | | H: 0 | H: 0 | H: 3 | Astringent taste |
| | | | | | | No aroma at all |
| Test formula | 60% | 40% (partially hydrolysed whey) | L: 0 | L: 2 | L: 5 | Creamy |
| | | | M: 6 | M: 3 | M: 1 | Buttery smell |
| | | | H: 1 | H: 2 | H:1 | Milky |
| | | | | | | Sweet |
| Young child formula (1 - 3 years) | 0% | 100% (partially hydrolysed whey) | | | | No aroma |
| | | | | | | Animalic taste |
| | | | L: 2 | L: 2 | L: 1 | Slightly bitter and cereal |
| | | | M: 5 | M: 5 | M: 2 | |
| | | | H: 0 | H: 0 | H: 4 | Very off flavour, metallic |
| | | | | | | Bitter after taste |
| Young child formula (1 -3 years) for cow's milk allergy | 0% | 100% (extensively hydrolysed whey) | | | | Bitter |
| | | | L: 4 | L: 4 | L: 1 | Off flavour |
| | | | M: 3 | M: 3 | M: 4 | Smells and tastes like cereal |
| | | | H: 0 | H: 0 | H: 2 | |
| Infant formula (0-12 months) with rice protein hydrolysate | 0% | 100% (partially hydrolysed rice) | | | | Strong cardboard smell |
| | | | L: 5 | L: 3 | L: 3 | Strong cereal smell |
| | | | M: 2 | M: 2 | M: 2 | Fermented smell |
| | | | H: 0 | H: 2 | H: 2 | Very creamy |
| | | | | | | Very bitter, did not taste like milk |

| | | | | | | |
|---|---|---|---|---|---|---|
| *Based on total protein fraction | | | | | | |

Table 2 indicates a preference to the test formula, having overall higher aroma intensity, a milky and creamy smell as well as taste. The test formula is perceived less bitter and there is no cereal or metallic taste to it. When it comes to sweetness, the test formula scores relatively better compared to the other products and is perceived sweeter. In this regard, the test formula had a similar mouthfeel and thickness as the infant formula (0 - 12 months) with 100% partially hydrolysed whey and young child formula (1 - 3 years) with 100% partially hydrolysed whey.

The inventors have surprisingly found that by dry-blending base powder, comprising the intact protein, with partially hydrolysed whey protein powder, the bulk density of the composition was higher and has a less challenging sensory profile in comparison to conventional hydrolysed protein formula having a more bitter taste. The flavour of the test formula has been improved greatly to be more acceptable and comparable to regular toddler formula with a creamy and milky flavour.

Furthermore, because of the increase in bulk density, the test formula has a more economic solution in reducing packaging materials and is therefore more environmental-friendly.

### Example 3 - Improved customer experience and improved digestive comfort of the nutritional composition comprising both intact protein and partially hydrolysed whey protein

Customer experience and digestive comfort of the test formula upon reconstitution was compared to products currently on the market. 107 primary caregivers with a child aged between 1- 3 years and currently using a young child formula participated in the study. The young child formula brand usage and main brand was captured before participation. Participants evaluated in a survey the sensory properties of the currently used formula (to be used as reference).

78% of the participants selected "easy on my child's stomach and easy to digest" as a reason for choosing a formula and met the requirements for the study. The participants were aged between 20 - 45 years old and 90% is female. With regard to ethnicity, the majority is from New Zealand-European, or from Maori origin. 33% of the toddlers was 1 year, 50% was 2 years and 17% was 3 years at the time of the study. The test formula product was sent to each participant and was advised to use a 50:50 blend with their current formula for the first 2-3 days to get their child used to the new test formula before using the test formula solely for the next 3-4 days. Participants were asked to make notes as they used the test formula solely over the last 3-4 days and to complete the questionnaire while they prepared the formula and fed their child. At the end of the week a survey link was sent and they were paid an incentive fee for participating.

**Table 4. Customer experience of test formula powder and reconstituted formula on product key measures and product preparation.**

| Agreement with statements | New test formula | Current formula |
|---|---|---|
| Powder is fine in size | 85% * | 69% |
| Powder particles are sticky | 20% * | 35% |
| Powder is free-flowing | 80% * | 66% |
| Formula has acceptable foam | 81% * | 54% |
| Formula has acceptable lumps | 72% * | 50% |
| Formula dissolves fast | 82% | 74% |
| Residue in bottle is acceptable | 72% * | 52% |

| | | |
|---|---|---|
| *the score is significant at 95% confidence level. | | |

The test formula had a high appeal with 80% rating between 8-10 on a scale of 0-10. The test formula powder was significantly perceived as finer, less sticky, more free-flowing, and had acceptable amount of foam, lumps and residue compared to the formula used before the study.

The evaluation of the test formula further included key measures of digestive comfort as described in Table 5. In this regard, 8% of the participating infants had a medical condition affecting their digestion such as constipation or gastro-oesophageal reflux.

**Table 5. Score of type of pain of infant perceived by primary caregivers post-consumption.**

| Type of pain | New test formula | Current formula |
|---|---|---|
| Tummy pain (once a week) | 4% * | 21% |
| Bloating | 20% * | 46% |
| Pain | 17% * | 41% |
| Feeling of fullness | 6% * | 24% |
| Nausea | 3% | 9% |
| Gas or wind (once a week) | 10% * | 21% |

| | | |
|---|---|---|
| *the score is significant at 95% confidence level. | | |

Overall, the test formula was significantly more gentle on digestion in infants and satisfied the expectations of "easy on my child's stomach and easy to digest" as a reason for choosing a formula and meeting the requirements for the study. Approximately 1 in 5 participants reported a net improvement regarding the amount of wind and/or tummy pain in their toddler. For the bulls-eye target, i.e. the target group that is highly engaged with the concept of (partially) hydrolysed protein and users of young child formula comprising partially hydrolysed protein 1 in 4 participants noticed a net improvement thereby showing the improved digestibility of the test formula comprising both intact and partially hydrolysed whey protein.

### Example 4 - A suitable nutritional composition

By way of example, and not limitation, an example of a suitable composition that may be used is as follows. The exemplary nutritional composition includes the following ingredients.

**Table 6. Exemplary nutritional composition**

| | | | Average quantity per 100 mL | |
|---|---|---|---|---|
| Energy | | | 290 | kJ |
| | | | 69 | kcal |
| Protein | | | 2.2 | 9 |
| Fat, total | | | 3.1 | 9 |
| | - Saturated | | 0.89 | 9 |
| | - Trans | | <0.1 | 9 |
| | - Polyunsaturated | | 0.58 | 9 |
| | | Omega 3 | 95 | mg |
| | | ALA | 57 | mg |
| | | LCPUFA | 37 | mg |
| | - monounsaturated | | 1.3 | 9 |
| Carbohydrates | | | 7.6 | 9 |
| | - sugars | | 7.4 | 9 |
| | | lactose | 7.3 | 9 |
| Sodium | | | 18.2 | mg |
| scGOS | | | 1.08 | 9 |
| IcFOS | | | 0.11 | 9 |
| *Bifidobacterium Breve* M-16V | | | 545 million | colony forming units (cfu) |

The formula is based on cow's milk protein and partially hydrolysed protein and further comprises minerals being calcium, phosphorus, magnesium, iron, zinc, iodine and vitamins A, B1, B2, B3, B6, B12 C, D3, E, folic acid.

## Claims

1. A process of obtaining a powdered nutritional powder composition, comprising:
a. providing an intact protein fraction in powdered form;
b. providing a partially hydrolysed whey protein fraction in powdered form;
c. dry blending the non-hydrolysed protein fraction and the partially hydrolysed whey protein fraction; and optionally,
d. adding dry nutritional ingredients comprising vitamins premix, DHA, probiotics, prebiotics in powder form to provide the nutritional powder composition;
wherein the protein fraction comprises 35-85 wt.% intact protein, and, 15-65 wt.% partially hydrolysed whey protein based on total weight of the protein fraction.

2. The process according to claim 1, wherein the intact fraction in powdered form is an infant formula base powder, preferably obtained by providing a milk and/or cream source, optionally wet blending vitamins, minerals, oils into the milk/cream source and followed by spray drying the intact protein fraction.

3. The process according to claim 1, wherein the nutritional composition has a tapped bulk density of the powder composition is at least 0.50 g/100 ml, preferably at least 0.52 g/100 ml, even more preferably at least 0.55 g/100 ml

4. A nutritional composition obtainable by the process according to any one of claims 1 - 3, wherein the nutritional composition comprises a protein fraction, wherein the nutritional composition has a tapped bulk density of the powder composition is at least 0.50 g/100 ml, preferably at least 0.52 g/100 ml, even more preferably at least 0.55 g/100 ml.

5. A nutritional composition selected from infant formula, follow on formula or young child formula, comprising a protein fraction comprising casein and whey protein, wherein the protein fraction comprises based on the total weight of the protein fraction 45-85 wt.% of intact protein, and, 15-65 wt.% of partially hydrolysed whey protein; wherein the nutritional composition is a powder composition, the bulk density of the powder composition is >0.50, preferably ≥ 0.52 g/100 ml, even more preferably at least 0.55 g/100ml.

6. The nutritional composition according to claim 4 or 5, wherein the non-hydrolysed (intact) protein fraction comprises casein, whey protein or mixtures thereof, preferably mixtures thereof.

7. The nutritional composition according to any one of claims 4-6, wherein the protein fraction comprises between 45 - 65 wt.% intact protein, even more preferably between 50 - 60 wt.% intact protein.

8. The nutritional composition according to any one of claims 4-7, wherein the protein fraction comprises between 35 - 55 wt % partially hydrolysed whey protein, even more preferably between 40 - 50 wt.% of the protein fraction comprises partially hydrolysed whey protein.

9. The nutritional composition according to any one of claims 4 - 8, wherein the partially hydrolysed protein comprises at least 80% of peptides having a molecular weight of 0.3 - 20 kDa, more preferably at least 40% of peptides a molecular weight of 1 to 10 kDa, even more preferably at least 50% of peptides having a molecular weight of below 5 kDa.

10. The nutritional composition according to any one of claims 4 - 9, wherein the partially hydrolysed protein comprises at most 20% of the peptides having a molecular weight above 20 kDa, more preferably at most 18%, even more preferably at most 15%.

11. The nutritional composition according to any one of claims 4 - 10, wherein the composition further comprises a probiotic, preferably comprises B. *breve.*

12. The nutritional composition according to any one of claims 4 - 11, wherein the composition further comprises non-digestible oligosaccharides, preferably prebiotic oligosaccharides, even more preferably fructo-oligosaccharides and/or galacto-oligosaccharides

13. A non-therapeutic method for promoting intestinal development and/or promoting digestion in an infant, said method comprising administering to an infant a nutritional composition selected from infant formula, follow on formula or young child formula, comprising a protein fraction comprising casein and whey protein, wherein the protein fraction comprises based on the total weight of the protein fraction 45-85 wt.% of intact protein, and, 15-65 wt.% of partially hydrolysed whey protein; wherein the nutritional composition is a powder composition, the bulk density of the powder composition is >0.50, preferably ≥ 0.52 g/100 ml, even more preferably at least 0.55 g/100ml.
